(19) Europäisches Patentamt
European Patent Office
Office européen des brevets

(11) **EP 2 482 098 A1**

(12) **EUROPÄISCHE PATENTANMELDUNG**

(43) Veröffentlichungstag:
**01.08.2012 Patentblatt 2012/31**

(51) Int Cl.:
***G01S 17/10*** *(2006.01)* ***G01S 7/486*** *(2006.01)*

(21) Anmeldenummer: **12000562.4**

(22) Anmeldetag: **28.01.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **01.02.2011 DE 102011010102**

(71) Anmelder: **Diehl BGT Defence GmbH & Co.KG 88662 Überlingen (DE)**

(72) Erfinder: **Tholl, Hans Dieter 88682 Salem (DE)**

(74) Vertreter: **Diehl Patentabteilung c/o Diehl Stiftung & Co. KG Stephanstrasse 49 90478 Nürnberg (DE)**

(54) **Verfahren zum Messen einer Entfernung**

(57) Die Erfindung geht aus von einem Verfahren zum Messen einer Entfernung zu einem Objekt (8), bei dem elektromagnetische Strahlung (6) von einem Strahlungssender (2) ausgesendet wird und eine Laufzeit bis zum Eintreffen eines am Objekt (8) reflektierten Anteils der elektromagnetischen Strahlung (6) auf einem Empfänger (4) ermittelt wird.

Um eine sichere und zuverlässige Entfernungsmessung zu erreichen, wird vorgeschlagen, dass die am Empfänger (4) empfangene Leistung (P) des reflektierten Anteils der elektromagnetischen Strahlung (6) über die Zeit (t) integriert wird und aus einer Eigenschaft der Steigung (S) des zeitlichen Verlaufs der so gewonnenen Energie (E) des reflektierten Anteils die Laufzeit bestimmt wird.

FIG 3

EP 2 482 098 A1

**Beschreibung**

Die Erfindung betrifft ein Verfahren zum Messen einer Entfernung zu einem Objekt, bei dem elektromagnetische Strahlung von einem Strahlungssender ausgesendet wird und eine Laufzeit bis zum Eintreffen eines am Objekt reflektierten Anteils der elektromagnetischen Strahlung auf einem Empfänger ermittelt wird.

Zur Entfernungsmessung mit Hilfe von elektromagnetischer Strahlung, beispielsweise Radar oder Laserstrahlung, gibt es drei grundlegend verschiedene Messverfahren: Zur Messung großer Entfernungen ist die Laufzeitmessung besonders geeignet. Zur Bestimmung kleiner Entfernungen oder kleiner Wegänderungen wird die Interferometrie eingesetzt, bei der aus der Phasenlage des an einem Messobjekt reflektierten und empfangenen Signals auf die Entfernung des Messobjekts geschlossen wird. Die Triangulation als dritte Methode ist sowohl zur Messung großer als auch kleiner Entfernungen geeignet. Die Entfernung wird über geometrische Winkelzusammenhänge gemessen. Bei allen drei Messverfahren wird die elektromagnetische Strahlung von einem Strahlungssender auf das Objekt gerichtet, dessen Entfernung bestimmt werden soll. Ist das Objekt sehr weit entfernt, so muss es mit einer genügenden Strahlungsleistung angestrahlt werden, um ein ausreichendes Reflexionssignal für die Entfernungsbestimmung empfangen zu können.

Es ist eine Aufgabe der vorliegenden Erfindung, ein Verfahren zum Messen einer Entfernung mit Hilfe elektromagnetischer Strahlung anzugeben, das zuverlässig und sicher arbeitet.

Diese Aufgabe wird durch ein Verfahren der eingangs genannten Art gelöst, bei dem erfindungsgemäß die am Empfänger empfangene Leistung des reflektierten Anteils der elektromagnetischen Strahlung über die Zeit integriert wird und aus einer Eigenschaft der Steigung des zeitlichen Verlaufs der so gewonnenen Energie des reflektierten Anteils die Laufzeit bestimmt wird.

Die Erfindung geht von der Überlegung aus, dass zur Entfernungsmessung eines Objekts mittels Laufzeitverfahren das Objekt mit der elektromagnetischen Strahlung angestrahlt werden muss und ein vom Objekt reflektierter Anteil der Strahlung auf dem Empfänger empfangen wird. Ist das Objekt weit entfernt, so muss das Objekt genügend stark angestrahlt werden, damit die ausgesendete Strahlung in genügendem Maße reflektiert wird, um ein akzeptables Signal-Zu-Rausch-Verhältnis zur Entfernungsbestimmung zu gewährleisten. Hierbei kann es sein, dass die Strahlungsleistung für näher gelegene Objekte, die zum Beispiel irrtümlicherweise angestrahlt werden, zu einer Beeinträchtigung führt. Dies gilt insbesondere bei der Verwendung von Laserpulsen hinsichtlich der Augensicherheit von in der Nähe des Laserstrahlers befindlichen Personen. Wird zur Vermeidung dieses Nachteils mit geringer Laserleistung gearbeitet, so ist die Reichweite der Entfernungsmessung unter Umständen zu gering.

Durch die erfindungsgemäße zeitliche Integration der empfangenen Leistung kann die Energie eines Laserpulses auf einen großen Zeitraum verteilt werden, sodass eine geringe Laserstrahlleistung bei einem entfernten Objekt ein genügend starkes Empfangssignal bewirkt. Der reflektierte und empfangene Anteil bewirkt eine Steigung bzw. eine Änderung der Steigung der integrierten Leistung, also der Energie des reflektierten Anteils, sodass aus der Änderung, in der Regel einem Wachsen, der Steigung auf das erfolgte Eintreffen der reflektierten Strahlung geschlossen werden kann.

Zweckmäßigerweise wird aus der Eigenschaft der Steigung des zeitlichen Verlaufs der Energie ein geeigneter Zeitpunkt ermittelt, der als Berechnungsgrundlage zur Bestimmung der Entfernung, insbesondere als Laufzeitende, verwendet wird. Aus dem bekannten Abstrahlzeitpunkt des Laserpulses und dem so bestimmten Zeitpunkt, z.B. Laufzeitende, kann die Entfernung des bestrahlten Objekts aus der Laufzeit der elektromagnetischen Strahlung bestimmt werden. Die zur Bestimmung des Zeitpunkts verwendete Eigenschaft der Steigung kann jedes dafür geeignete Merkmal der Steigung sein, wie deren zeitlicher Verlauf, eine Änderung der Steigung, ein Wert der Steigung, usw. Der geeignete Zeitpunkt, der im Folgenden auch Berechnungszeitpunkt genannt wird, kann jeder Zeitpunkt sein, aus dem mittels einer Laufzeitberechnung die Entfernung zum Objekt bestimmbar ist.

Das grundlegende Prinzip der Erfindung beruht auf der integrativen Messmethode in Verbindung mit der Laufzeitmessung. Bei diesem Messverfahren wird nicht - wie bei Laufzeitmessungen üblich - der Zeitverlauf der empfangenen Pulsleistung abgetastet, sondern der Zeitverlauf der integrierten empfangenen Strahlungsleistung, also der Zeitverlauf der Energie des empfangenen Pulses. Durch die Integration wirkt der Detektor als Tiefpass. Hierdurch ist das Verfahren besonders robust gegen kurzzeitige Störungen. Außerdem können für das erfindungsgemäße Verfahren lange Pulse verwendet werden mit geringer Spitzenleistung. Hierdurch kann der Vorteil von reduzierten Anforderungen an die Zerstörschwellen optischer Beschichtungen und an die Bandbreite der Auswerteelektronik erreicht werden.

Die elektromagnetische Strahlung ist zweckmäßigerweise Laserstrahlung, insbesondere infrarote Laserstrahlung, sodass der Strahlungssender ein Laser insbesondere ein Infrarotlaser ist. Die Strahlung kann gepulst ausgesendet werden, insbesondere in Form von Rechteckpulsen. Die gemessene Entfernung ist vorteilhafterweise größer als ein Kilometer, sodass das Objekt in einer Entfernung von mehr als einem Kilometer vom Strahlungssender oder -empfänger entfernt ist.

In einer vorteilhaften Ausführungsform der Erfindung wird ein Zeitpunkt der Eigenschaft der Steigung, insbesondere der Zeitpunkt einer Steigungsänderung (Beginn und/oder Ende) ermittelt und daraus die Laufzeit bestimmt. Das am Empfänger anliegende Signal wird durch das Eintreffen des am Objekt reflektierten Pulses ansteigen und nach dem Eintreffen des Endes des Pulses wieder abfallen. Diese beiden Zeitpunkte können auch aus dem integrierten Signal extrahiert werden. Eine weitere Möglichkeit liegt darin, den Mittelpunkt des Pulses beziehungsweise ein Steigungsmaximum zu ermitteln, beispielsweise mit Hilfe eines Steigungsfilters, der hierfür zweckmäßigerweise sehr breitbandig ausgeführt ist. Auf die Stärke der Steigung beziehungsweise die Leistung der reflektierten Strahlung kommt es hierbei nicht an, sodass sich auch Störungen nur geringfügig auf die ermittelten Zeiten auswirken. Die Messung ist hiedurch sehr störungsresistent. Unter einem Steigungsfilter wird vorliegend ein Prozessmittel verstanden, dass dazu vorbereitet ist, die Steigung des zeitlichen Verlaufs der Energie des reflektierten Anteils der elektromagnetischen Strahlung zu erfassen.

Weiter ist es vorteilhaft, wenn die elektromagnetische Strahlung vom Strahlungssender kontinuierlich über eine Pulslänge ausgesendet wird, insbesondere mit konstanter Leistung. Weiter ist es vorteilhaft, wenn die Leistung von am Empfänger eintreffender Strahlung über die Dauer der Pulslänge integriert wird und die Laufzeit bzw. das Laufzeitende aus der über die gesamte Pulslänge bestimmten Steigung des Energieverlaufs ermittelt wird. Durch die Verwendung der Daten über die gesamte Pulslänge ist die Messung besonders unempfindlich gegen Störungen.

Besonders effektiv ist das Verfahren, wenn vom Strahlungssender lange Pulse ausgesendet werden, sodass eine lange Integration des reflektierten Signals möglich ist. Zweckmäßigerweise wird ein Strahlungspuls von zumindest einer Mikrosekunde ausgesendet, wobei es vorteilhaft ist, wenn der Verlauf der Energie kontinuierlich über diesen Zeitraum erfasst wird, selbstverständlich zeitlich versetzt, da der empfangene Puls später gemessen wird, als der Sendepuls ausgesendet wird. Es ist auch möglich, das erfindungsgemäße Verfahren auch auf kürzere Pulse anzuwenden, wobei jedoch Pulse im Mikrosekundenbereich als besonders vorteilhaft angesehen werden.

Aus dem Verlauf der Steigung ist in irgendeiner Form ein Berechnungszeitpunkt zu ermitteln, aus dem die Laufzeit bzw. das Laufzeitende bestimmt wird. Hierzu wird die momentane Energie des reflektierten Anteils zweckmäßigerweise an mehreren Zeitpunkten am Empfänger gemessen (gesampled), wobei der Verlauf z.B. mittels eines Steigungsfilters erfasst wird. Hierdurch kann der Verlauf der Steigung über die Zeit im Wesentlichen unabhängig von kurzzeitigen Schwankungen erfasst werden, sodass aus diesem Verlauf ein geeigneter Berechnungszeitpunkt zur Ermittlung des Laufzeitendes ermittelt werden kann.

Vorteilhafterweise ist die Dauer des Steigungsfilters an die Pulsdauer angepasst. Weist der Steigungsfilter genau die Filterbreite der Pulsdauer auf, so kann ein Steigungsbeginn, Steigungsende und/oder ein zeitlicher Steigungsmittelpunkt besonders zuverlässig erfasst werden.

Die Extrahierung des Merkmals der Steigung, unter Verwendung dessen der Berechnungszeitpunkt bestimmt wird, kann durch mehrere Verfahren erfolgen, die alternativ oder gemeinsam angewendet werden können. Eine Möglichkeit besteht darin, dass ein Steigungsgrenzwert des zeitlichen Verlaufs der Energie vorgegeben wird und die Laufzeit anhand des Zeitpunkts berechnet wird, an dem die Steigung den Steigungsgrenzwert erreicht. Bei diesem besonders einfachen Verfahren wird die Ankunft des reflektierten Pulses als solche erkannt, wobei auf eine zeitliche genaue Ermittlung beispielsweise des Steigungsanfangs und des Steigungsendes verzichtet werden kann.

Wenn ein Steigungsgrenzwert gesetzt wird, so erreicht die Steigung diesen Steigungsgrenzwert zweimal: zunächst zu Beginn des Pulses von unten und gegen Ende des Pulses von oben kommend. Da die Hinterkante des empfangenen Pulses in der Regel glatter und daher zuverlässiger messbar ist als die Vorderkante, ist es vorteilhaft, wenn derjenige Zeitpunkt als Berechnungszeitpunkt verwendet wird, an dem die Steigung den Steigungsgrenzwert von oben kommend erreicht.

Da das integrative Messverfahren sehr stabil ist gegen kurzzeitige Störungen reicht bereits ein sehr schwacher Puls aus, um zuverlässig anhand der Steigung des integrierten Pulses erkannt zu werden. Dennoch ist es vorteilhaft, die Mindeststeigung beziehungsweise den Steigungsgrenzwert in Abhängigkeit zum Rauschen festzulegen. Vorteilhaft ist es, die Mindeststeigung bei einem optischen Signal-Zu-Rausch-Verhältnis von mindestens 5:1 festzulegen.

Bei einem anderen Verfahren wird die Laufzeit vorteilhafterweise anhand des Zeitpunkts berechnet, an dem die Steigung ihren Maximalwert erreicht. Hierdurch kann der zeitliche Mittelpunkt oder ein anderer beliebiger, jedoch definierter Zeitpunkt der Steigungsflanke erkannt und als Berechnungszeitpunkt verwendet werden.

Um über den kompletten Strahlungspuls integrieren zu können, sollte der Empfänger in der Lage sein, die empfangene Energie zumindest über die Zeitdauer des Pulses zu speichern. Es sollten daher für diese Messmethoden nicht zu schnelle Empfänger eingesetzt werden. Hierin liegt ein weiterer Vorteil des Verfahrens, denn es können einfache elektronische Schaltungen verwendet werden. Besonders vorteilhaft ist das Verwenden von Matrixdetektoren mit matrixförmig angeordneten Detektorelementen, mit denen der Verlauf der Energie des reflektierten Anteils in mehreren Detektorelementen ortsaufgelöst ermittelt werden kann.

Außerdem ist die Erfindung gerichtet auf eine Vorrichtung zum Durchführen eines mehrerer oder aller der oben genannten Verfahrensschritte. Zweckmäßigerweise ist die Vorrichtung zum Messen einer Entfernung zu einem Objekt vorbereitet und umfasst einen Strahlungssender zum Abstrahlen von elektromagnetischer Strahlung, einen Empfänger zum Empfangen eines am Objekt reflektierten Anteils der elektromagnetischen Strahlung und ein Prozessmittel zum Ermitteln der Entfernung anhand der Laufzeit der elektromagnetischen Strahlung, z.B. vom Aussendezeitpunkt am Strahlungssender bis zum Empfangszeitpunkt am Empfänger.

Um eine zuverlässige und sichere Entfernungsbestimmung zu ermöglichen, wird vorgeschlagen, dass ein Element der Vorrichtung dazu vorbereitet ist, die am Empfänger empfangene Leistung des reflektierten Anteils der elektromagnetischen Strahlung über die Zeit zu integrieren. Dies kann beispielsweise durch einen Kondensator realisiert werden, der durch ein Signal des Empfängers elektrisch aufgeladen wird und dessen Spannung ausgelesen wird. Das Prozessmittel ist zweckmäßigerweise in der Lage, aus einer Eigenschaft der Steigung des zeitlichen Verlaufs der aus der Integration gewonnenen Energie des reflektierten Anteils die Laufzeit der elektromagnetischen Strahlung zu bestimmen. Das Prozessmittel ist vorteilhafterweise dazu vorbereitet, die Durchführung der erfindungsgemäßen Verfahrensschritte und insbesondere weiterer der oben genannten Verfahrensschritte zu steuern. Eine solche Vorbereitung kann durch ein entsprechendes Datenverarbeitungsprogramm des Prozessmittels vorliegen, dessen Ablauf - beispielsweise in Verbindung mit geeigneten Eingangssignalen - eine solche Steuerung beziehungsweise Ermittlung oder Durchführung bewirkt. Hierzu umfasst das Prozessmittel zweckmäßigerweise elektronische Elemente, wie einen Prozessor und Datenspeicher, die zum Ablaufen des Datenverarbeitungsprogramms notwendig sind.

Weitere Vorteile ergeben sich aus der folgenden Zeichnungsbeschreibung. In der Zeichnung sind Ausführungsbeispiele der Erfindung dargestellt. Die Zeichnung und die Beschreibung enthalten zahlreiche Merkmale in Kombination, die der Fachmann zweckmäßigerweise auch einzeln betrachten und zu sinnvollen weiteren Kombinationen zusammenfassen wird.

Es zeigen:

Fig. 1    eine Vorrichtung zum Messen einer Entfernung,
Fig. 2    die theoretische Leistung eines reflektierten Anteils eines Laserpulses über die Zeit,
Fig. 3    der Verlauf der Energie des reflektierten Laserpulses zusammen mit Hintergrundstrahlung über die Zeit,
Fig.4     ein Diagramm der Steigung des Energieverlaufs anhand der Signalintensität oder Kondensatorspannung über eine Anzahl von Messpunkten mit angelegten Steigungsgeraden und
Fig. 5    die durch den Steigungsfilter anhand der Steigungsgeraden ermittelte Steigung im Verlauf über die Messpunkte.

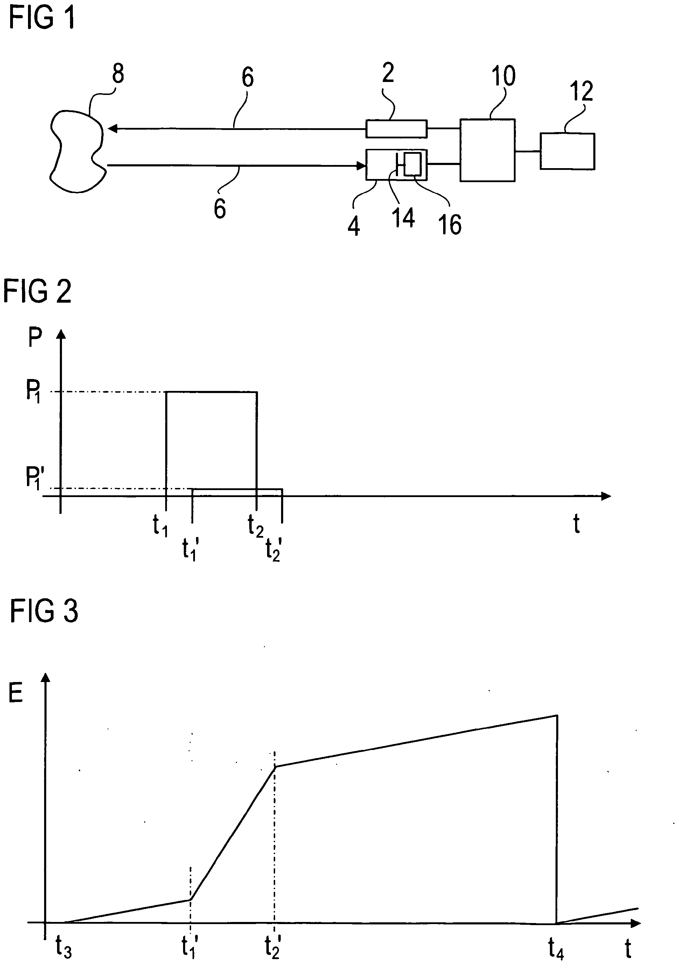

Fig. 1 zeigt eine Vorrichtung zum Messen einer Entfernung mit einem Strahlungssender 2, einem Empfänger 4 zum Empfangen von Strahlung 6 vom Strahlungssender 2, die an einem Objekt 8 reflektiert wurde, und einem Prozessmittel 10 zum Ermitteln der Entfernung zum Objekt 8 aus Daten des Empfängers 4. Das Prozessmittel 10 dient außerdem zum Steuern des Strahlungssenders 2 und ist mit einer Vorrichtung 12 verbunden, die die Entfernungsdaten vom Prozessmittel 10 für einen beliebigen Prozess nutzt, beispielsweise zur Steuerung eines Flugkörpers zum Objekt 8. Der Strahlungssender 2 ist ein Infrarot-Laser zum Aussenden von infraroter Laserstrahlung in Form von Pulsen. Der Empfänger 4 ist mit einem Detektor 14 ausgestattet, der als Matrixdetektor mit einer Vielzahl von Detektorelementen ausgeführt ist. Der Detektor 14 ist mit einem Integrator 16 verbunden, der wiederum mit einer Vielzahl von Integratorzellen versehen sein kann, von denen jede einer Detektorzelle zugeordnet ist, sodass das Signal einer jeden Detektorzelle von einer Integratorzelle integriert werden kann. Die Entfernung, die durch die Vorrichtung gemessen wird, ist die Entfernung vom Strahlungssender 2 beziehungsweise Empfänger 4 zum Objekt 8 und wird aus der Laufzeit der Strahlung 6 vom Strahlungssender 2 über die Reflektion am Objekt 8 zum Empfänger 4 berechnet.

Fig. 2 zeigt ein Diagramm, in dem die Leistung P von am Objekt 8 reflektierter Strahlung 6, die den Empfänger 4 erreicht, über die Zeit t aufgetragen ist. Zu einem Zeitpunkt $t_1$ wird vom Strahlungssender 2 infrarote Laserstrahlung in Richtung zum Objekt 8 ausgesendet, und zwar in Form eines gleichförmigen Pulses der Leistung $P_1$, der zum Zeitpunkt $t_2$ endet. Die Pulsdauer $\Delta t = t_2 - t_1$ beträgt 2 μs. Selbstverständlich sind auch geringere Pulsdauern möglich, die auch unterhalb einer Mikrosekunde liegen können. Die Strahlung wird am Objekt 8 reflektiert und der reflektierte Anteil der Strahlung 6 trifft mit der Leistung $P_2$ zum Zeitpunkt $t_1'$ am Empfänger 4 ein und wird dort registriert. Hierzu ist der Empfänger 4 mit einem Spektralfilter versehen, der für einen definierten Spektralbereich um die Frequenz des Strahlungssenders 2 transparent und für die übrigen Spektralbereiche intransparent ist. Während der Zeit zwischen $t_1'$ und $t_2'$ wird der reflektierte Strahlungspuls am Empfänger 4 registriert.

Dieses Registrieren ist in Fig. 3 dargestellt. Zu einem Zeitpunkt $t_3$ wird der Detektor 14 beziehungsweise dessen Detektorzellen initialisiert (vor dem Zeitpunkt $t_3$). Zum Zeitpunkt $t_3$ beginnt der Empfänger 4 die einfallende Strahlung zu registrieren und integriert die einfallende Leistung P über die Zeit auf, sodass das am Empfänger 4 anliegende Signal proportional zur Energie E der am Empfänger 4 registrierten Strahlung ist. Bis zum Zeitpunkt $t_1'$ wird lediglich Hintergrundstrahlung registriert, sodass das Energiesignal im Wesentlichen linear ansteigt, wie im Abschnitt zwischen $t_3$ und $t_1'$ in Fig. 3 dargestellt ist. Ab dem Zeitpunkt $t_1'$ trifft der reflektierte Anteil der Strahlung 6 aus dem Strahlungssender 2 am Empfänger 4 ein und addiert sich auf die Hintergrundstrahlung, sodass die Steigung des zeitlichen Verlaufs der registrierten Energie E ansteigt. Nach dem Pulsende zum Zeitpunkt $t_2'$ entspricht die Steigung des am Integrator 16 anliegenden Signals wieder der Leistung der Hintergrundstrahlung, die am Empfänger 4 registriert wird. Zum Zeitpunkt $t_4$ wird die Integration gestoppt, der Integrator 16 auf Null gesetzt und die Integration wird erneut begonnen. Das vom Empfänger 4 ausgegebene Signal steigt somit während eines Messzyklus, der in diesem Ausführungsbeispiel die Zeitspanne $t_4 - t_3$ beträgt, kontinuierlich an, wobei dieser Messzyklus zeitlich länger ist, als der vom Strahlungssender 2 ausgesendete Messpuls.

Bei einem schwachen Signal, z.B. bei einem sehr weit entfernten oder sehr kleinen Objekt, kann es vorkommen, dass eine Kumulierung über mehrere Strahlungspulse sinnvoll ist, um aus dem kumulierten Signal zu einer genaueren Auswertung zu gelangen. Es werden dann mehrere Pulse addiert, z.B. mit Hilfe eines Synchonisierungszeitpunkts, wie $t_3$ bzw. $t_4$, und der kumulierte Puls wird ausgewertet, z.B. wie unten beschrieben.

Weiter ist es möglich, die Integration über mehrere Impulse zu führen, also den Integrator 16 nicht auf Null zu setzen. Es entsteht ein Energiesignal über mehrere Pulse. Jeder Puls kann einzeln ausgewertet werden, z.B. wie unten beschrieben. Dann wird der Bestimmungszeitpunkt aus jedem Puls ermittelt, z.B. $t_2$'. Aus einer Randbedingung des Pulszyklus, z.B. dass alle Bestimmungszeitpunkte zeitlich so weit voneinander beabstandet sein müssen, wie ein Pulszyklus lang ist, also im obigen Beispiel $t_4 - t_3$, können die Bestimmungszeitpunkte präzisiert werden, z.B. arithmetisch um einen Bestimmungszeitpunkt-Mittelwert im Pulszyklus gemittelt werden.

Das Signal des Empfängers 4 wird während des Messzyklus und auch während der Dauer $\Delta t$ des Messpulses mehrfach ausgelesen. Im gezeigten Ausführungsbeispiel beträgt die Auslesefrequenz 10 MHz, sodass die Steigung zwischen den Zeitpunkten $t_1$' und $t_2$' zwanzigmal abgetastet wird.

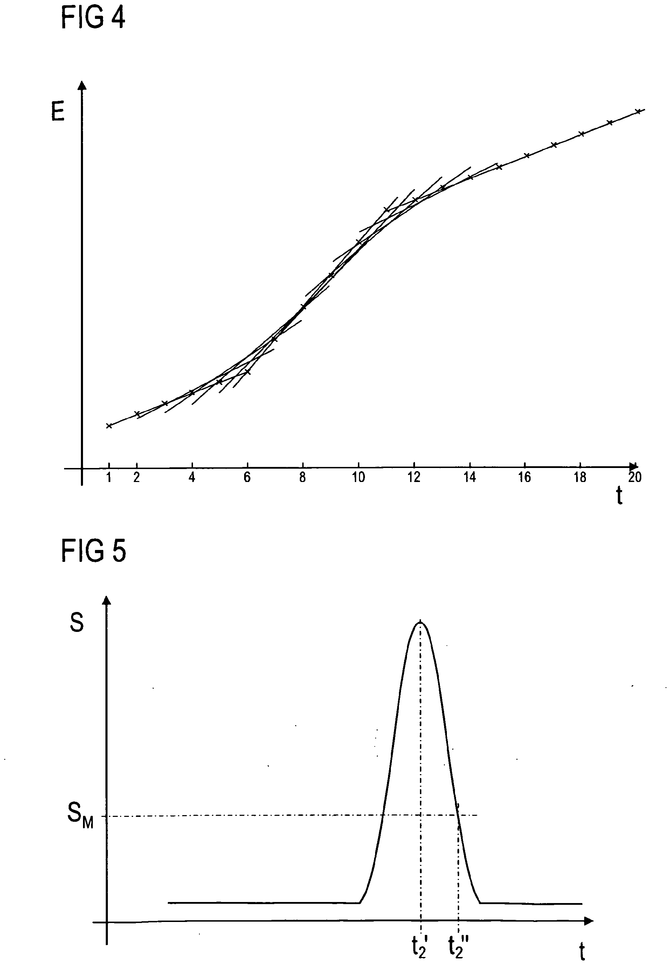

In Fig. 4 ist dieses Abtastergebnis über die Zeit t aufgetragen. Äquivalent zur Zeit t sind in Fig. 4 zwanzig Abtaststellen aufgetragen, wobei der Übersicht halber nur fünf Messpunkte pro Mikrosekunde eingezeichnet sind, um das Diagramm lesbar zu halten. Entsprechend wird das Signal des Empfängers 4 beziehungsweise die vom Empfänger 4 registrierte Energie während der Dauer $\Delta t$ eines Sendepulses fünfmal abgetastet. In Fig. 4 ist diese Abtastung idealisiert dargestellt. Die Messpunkte 1 bis 6 tasten das Energiesignal des Rauschens beziehungsweise der Hintergrundstrahlung ab. Der Messpunkt 6 liegt auf dem Zeitpunkt $t_1$', wobei er jedoch in der Realität üblicherweise nicht auf diesem Zeitpunkt liegt. Die Messpunkte 7 bis 11 liegen auf der Steigung des registrierten Pulses, wobei der Messpunkt 11 auf dem Zeitpunkt $t_2$' liegt. Auch dies ist idealisiert und üblicherweise nicht der Fall. Auf jeden Fall ist es vorteilhaft, wenn die Frequenz der Abtastungen so gewählt ist, dass $\Delta t$ ein Vielfaches des Kehrwerts der Abtastfrequenz ist, bei dem in Fig. 4 gezeigten Beispiel 2 $\mu$s : 0,4 $\mu$s = 5 : 1.

Zur Auswertung der Steigung wird ein Steigungsfilter verwendet. Dieser kann ein Regressionsfilter sein. In Fig. 4 ist die Verwendung eines linearen Regressionsfilters dargestellt, der die Steigung über einen Zeitraum von 5 Messpunkten bestimmt. Entsprechend sind in Fig. 4 eine Anzahl von Steigungsgeraden mit jeweils der Länge von 5 Punkten dargestellt, die nach der Methode der kleinsten Abstandsquadrate berechnet sind. Die Steigung der Geraden kann jeweils dem letzten Messpunkt zugewiesen werden, der zur Berechnung der Steigungsgeraden verwendet wurde. Die Anzahl der Messpunkte, welche sich in jeder Geraden befinden, also die Filterbreite des Regressionsfilters, ist zweckmäßigerweise die Pulsbreite $\Delta t$. Entsprechend hat diejenige Gerade, welche sich über die gesamte Pulslänge $\Delta t$ erstreckt - oder üblicherweise: deren Schwerpunkt am nächsten zum zeitlichen Mittelpunkt des Pulses liegt - die größte Steigung. Diese Steigung ist nun dem Messpunkt zugewiesen, der auf dem Zeitpunkt $t_2$' liegt - oder üblicherweise dem Messpunkt, der diesem Zeitpunkt am nächsten liegt.

Fig. 5 zeigt die aus dem Regressionsfilter ermittelte Steigung S über die Zeit t. Bei dem in Fig. 5 gezeigten Ausführungsbeispiel liegen mehr als 5 Messpunkte innerhalb der Pulsdauer, beispielsweise 20 oder 50. Entsprechend kann der Zeitpunkt, zu dem die Steigung ihr Maximum erreicht, bei dem in Fig. 5 gezeigten Ausführungsbeispiel ist dies der Zeitpunkt $t_2$', sehr genau bestimmt werden. Da die Filterbreite des Steigungsfilters der Pulsdauer entspricht, ist der Zeitpunkt des Maximums der Steigung derjenige Zeitpunkt, der der entsprechenden Geraden zugewiesen ist, also beispielsweise das Pulsende $t_2$'. In gleicher Weise kann eine ermittelte Steigung jeweils einem beliebigen anderen Messpunkt zugewiesen werden, wobei dann der entsprechende Zeitpunkt dem Steigungsmaximum zugewiesen wird.

Unabhängig davon, welcher Zeitpunkt bestimmt wird, ist dessen zeitliche Lage innerhalb der Pulsdauer des reflektierten Pulses bekannt. Aus diesem Zeitpunkt kann das Laufzeitende bestimmt werden, aus dem die Laufzeit der ausgesandten Strahlung 6 und damit die Entfernung zum Objekt 8 bestimmt wird. Bei den in der Fig. 4 und der Fig. 5 dargestellten Ausführungsbeispielen ist dies der Zeitpunkt $t_2$', wobei die Laufzeit L aus L = $t_2$' - $t_2$ bestimmt werden kann. Da $t_2$ bekannt ist, kann aus der Steigung des zeitlichen Verlaufs der Energie des reflektierten Anteils das Laufzeitende und hieraus die Entfernung zum Objekt 8 bestimmt werden.

Ein alternatives oder zusätzliches Verfahren zur Laufzeitbestimmung verwendet eine Mindeststeigung $S_M$, die in Fig. 5 dargestellt ist. Der Steigungsverlauf erreicht diese Mindeststeigung $S_M$ zweimal: nämlich zunächst von unten kommend und später von oben kommend. Erreicht die Steigung die Mindeststeigung $S_M$, so wird der entsprechende Zeitpunkt zur Laufzeitmessung verwendet. Im dargestellten Ausführungsbeispiel wird der Zeitpunkt $t_2$", an dem die Steigung des Verlaufs die Mindeststeigung $S_M$ von oben kommend erreicht, bestimmt. Dieser Zeitpunkt $t_2$" liegt zwar zeitlich nicht genau definiert innerhalb der Pulsbreite, da seine Lage von der Größe der maximalen Steigung S abhängt, kann er dennoch mit ausreichender Genauigkeit verwendet werden, da die Breite des Steigungsverlaufs, wie in Fig. 5 gezeigt, im Wesentlichen von der Pulsbreite und vom Steigungsfilter beziehungsweise dessen Filterbreite abhängt, wobei diese beiden Parameter bekannt sind.

Die folgende Rechnung gibt eine grobe Schätzung der Messgenauigkeit des beschriebenen Verfahrens. Die Energie Q eines rechteckigen Laserpulses ist das Produkt der maximalen Laserleistung P mit der Zeit t:

$$Q = P\,t.$$

Ausgehend hiervon wird der 1-Sigma-Fehler $\sigma_Q$ der Energiemessung angenommen als

$$\sigma_Q = P\sigma_t.$$

Der 1-Sigma-Fehler $\sigma_t$ der Flugzeitmessung ist:

$$\sigma_t = \frac{\sigma_Q}{P} = \frac{\sigma_Q \Delta t_{pulse}}{\left(P\Delta t_{pulse}\right)} = \frac{\sigma_Q \Delta t_{pulse}}{Q_{pls}} = \frac{\Delta t_{pulse}}{SNR}.$$

Schließlich wird der 1-Sigma-Entfernungs-Fehler durch folgende Gleichung angegeben:

$$\sigma_R = \frac{c}{2}\sigma_t = \frac{c\Delta t_{pulse}}{2SNR}.$$

Wird von einer Pulslänge von 5 μs und einem Signal-Rausch-Verhältnis (SNR) von 10 ausgegangen, so wird eine 1-Sigma-Genauigkeit $\sigma_R$ von 75 m erreicht. Eine Reduzierung der Pulslänge auf 2 μs verbessert die Entfernungsmessung deutlich. Zwar kann immer noch keine Nahmessung der Entfernung vorgenommen werden, doch ausgehend davon, dass durch die hohe Empfindlichkeit des Verfahrens sehr weit entfernte Objekte - Entfernungsmessung von Objekten mit kleinem Rückstreuungsquerschnitt bis 2 km oder sogar 5 km sind möglich - ist die Entfernungsmessung befriedigend genau.

Weiter zu bedenken ist ein zusätzlicher Fehler, nämlich dass der Rechteckpuls des Lasers nicht ganz rechteckig sein wird. Es kann beispielsweise angenommen werden, dass der Zeitfehler durch die ungenaue Rechteckigkeit 10 % der Pulsweite Δt beträgt. Dieser muss quadratisch zum Messfehler addiert werden und verschlechtert die Genauigkeit etwas.

Eine weitere Auswertemöglichkeit besteht darin, die zeitliche Lage des Maximums der Steigung S zu ermitteln und nur dann zur Entfernungsbestimmung zu verwenden, wenn die absolute Größe der Steigung die Mindeststeigung $S_M$ übersteigt. Hierzu wird die Mindeststeigung in Abhängigkeit vom Signal-Rausch-Verhältnis festgelegt, beispielsweise auch das Verhältnis 5 : 1.

Durch die Verwendung eines Matrixdetektors 14 und einer entsprechenden Optik im Empfänger 4 kann die Entfernungsabtastung zum Objekt 8 ortsaufgelöst erfolgen, sodass eine Objekttopographie erfasst wird.

Bezugszeichenliste

2    Strahlungssender

4    Empfänger

6    Strahlung

8    Objekt

10    Prozessmittel

| 12 | Vorrichtung |
| 14 | Detektor |
| 16 | Integrator |
| E | Energie |
| P | Leistung |
| S | Steigung |
| $S_M$ | Mindeststeigung |

**Patentansprüche**

1. Verfahren zum Messen einer Entfernung zu einem Objekt (8), bei dem elektromagnetische Strahlung (6) von einem Strahlungssender (2) ausgesendet wird und eine Laufzeit bis zum Eintreffen eines am Objekt (8) reflektierten Anteils der elektromagnetischen Strahlung (6) auf einem Empfänger (4) ermittelt wird, **dadurch gekennzeichnet, dass** die am Empfänger (4) empfangene Leistung (P) des reflektierten Anteils der elektromagnetischen Strahlung (6) über die Zeit (t) integriert wird und aus einer Eigenschaft der Steigung (S) des zeitlichen Verlaufs der so gewonnenen Energie (E) des reflektierten Anteils die Laufzeit bestimmt wird.

2. Verfahren nach Anspruch 1,
**dadurch gekennzeichnet,**
**dass** die Eigenschaft eine Änderung der Steigung (S) ist und ein Zeitpunkt ($t_1$', $t_2$'), an dem eine Änderung der Steigung stattfindet, ermittelt und daraus die Laufzeit bestimmt wird.

3. Verfahren nach Anspruch 1 oder 2,
**dadurch gekennzeichnet,**
**dass** die elektromagnetische Strahlung (6) vom Strahlungssender (2) kontinuierlich über eine Pulslänge ausgesendet wird, die Leistung (P) von am Empfänger (4) eintreffender Strahlung (6) über die Dauer der Pulslänge integriert wird und die Laufzeit aus der über die gesamte Pulslänge bestimmten Steigung (S) des Energieverlaufs ermittelt wird.

4. Verfahren nach einem der vorhergehenden Ansprüche,
**dadurch gekennzeichnet,**
**dass** die elektromagnetische Strahlung (6) vom Strahlungssender (2) kontinuierlich über einen Zeitraum von zumindest einer Mikrosekunde ausgesendet wird und der Verlauf der Energie (E) kontinuierlich über einen Zeitraum von zumindest einer Mikrosekunde erfasst wird.

5. Verfahren nach einem der vorhergehenden Ansprüche,
**dadurch gekennzeichnet,**
**dass** die momentane Energie (E) des reflektierten Anteils an mehreren Zeitpunkten am Empfänger (4) gemessen wird und der Verlauf mittels eines Steigungsfilters erfasst wird.

6. Verfahren nach Anspruch 5,
**dadurch gekennzeichnet,**
**dass** die elektromagnetische Strahlung (6) vom Strahlungssender (2) kontinuierlich über eine Pulslänge ausgesendet wird und der Steigungsfilter genau die Filterbreite der Pulsdauer aufweist.

7. Verfahren nach einem der vorhergehenden Ansprüche,
**dadurch gekennzeichnet,**
**dass** ein Steigungsgrenzwert ($S_M$) des zeitlichen Verlaufs der Energie (E) vorgegeben wird und die Laufzeit anhand des Zeitpunkts ($t_2$") berechnet wird, an dem die Steigung (S) den Steigungsgrenzwert ($S_M$) erreicht.

8. Verfahren nach Anspruch 8,
**dadurch gekennzeichnet,**

**dass** die Laufzeit anhand des Zeitpunkts ($t_2''$) berechnet wird, an dem die Steigung (S) den Steigungsgrenzwert ($S_M$) von oben kommend erreicht.

9. Verfahren nach Anspruch 8 oder 9,
   **dadurch gekennzeichnet,**
   **dass** ein Rauschen im Empfänger (4) erfasst wird und die Mindeststeigung ($S_M$) in Abhängigkeit vom Rauschen festgelegt wird.

10. Verfahren nach einem der vorhergehenden Ansprüche,
    **dadurch gekennzeichnet,**
    **dass** die Laufzeit anhand des Zeitpunkts ($t_2''$) berechnet wird, an dem die Steigung (S) ihren Maximalwert erreicht.

11. Verfahren nach einem der vorhergehenden Ansprüche,
    **dadurch gekennzeichnet,**
    **dass** der Empfänger (4) ein Detektor (14) mit einer Matrix aus Detektorelementen ist und der Verlauf der Energie (E) des reflektierten Anteils in mehreren Detektorelementen ortsaufgelöst ermittelt wird.

12. Vorrichtung zur Durchführung eines Verfahrens nach einem der vorhergehenden Ansprüche.

FIG 1

FIG 2

FIG 3

FIG 4

FIG 5

Europäisches
Patentamt

European
Patent Office

Office européen
des brevets

## EUROPÄISCHER RECHERCHENBERICHT

**Nummer der Anmeldung**

EP 12 00 0562

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 548 351 A2 (LEUZE LUMIFLEX GMBH & CO KG [DE] LEUZE ELECTRONIC GMBH & CO KG [DE]) 29. Juni 2005 (2005-06-29) * Absatz [0030] - Absatz [0035]; Abbildungen 1,3 * ----- | 1-12 | INV. G01S17/10 G01S7/486 |
| X | DE 101 63 534 A1 (SIEMENS AG [DE]) 10. Juli 2003 (2003-07-10) * Absatz [0031]; Abbildungen 1,2 * ----- | 1-12 | |
| X | EP 1 048 961 A2 (SIEMENS AG [DE]) 2. November 2000 (2000-11-02) * Absatz [0017]; Abbildungen 1,2 * ----- | 1-12 | |
| A | EP 1 040 366 A1 (SIEMENS AG [DE]) 4. Oktober 2000 (2000-10-04) * Abbildungen 5-8 * ----- | 1-12 | |
| A | US 2010/301193 A1 (GUELLEC FABRICE [FR] ET AL) 2. Dezember 2010 (2010-12-02) * Abbildungen 4-6 * ----- | 1-12 | RECHERCHIERTE SACHGEBIETE (IPC) |
| A | EP 1 843 171 A1 (SICK AG [DE]) 10. Oktober 2007 (2007-10-10) * Abbildung 2 * ----- | 1-12 | G01S |
| A | DE 10 2005 046950 B3 (SIEMENS AG [DE]) 21. Dezember 2006 (2006-12-21) * Abbildung 2 * ----- | 1-12 | |

Der vorliegende Recherchenbericht wurde für alle Patentansprüche erstellt

| Recherchenort | Abschlußdatum der Recherche | Prüfer |
|---|---|---|
| München | 3. Mai 2012 | Rudolf, Hans |

KATEGORIE DER GENANNTEN DOKUMENTE

X : von besonderer Bedeutung allein betrachtet
Y : von besonderer Bedeutung in Verbindung mit einer
　　anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
　　nach dem Anmeldedatum veröffentlicht worden ist
D : in der Anmeldung angeführtes Dokument
L : aus anderen Gründen angeführtes Dokument

......................................................................................
& : Mitglied der gleichen Patentfamilie, übereinstimmendes
　　Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**      EP 12 00 0562

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-05-2012

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 1548351 | A2 | 29-06-2005 | AT | 505687 | T | 15-04-2011 |
| | | | DE | 10360789 | A1 | 28-07-2005 |
| | | | EP | 1548351 | A2 | 29-06-2005 |
| | | | US | 2005265596 | A1 | 01-12-2005 |
| DE 10163534 | A1 | 10-07-2003 | DE | 10163534 | A1 | 10-07-2003 |
| | | | EP | 1456823 | A2 | 15-09-2004 |
| | | | US | 2005078297 | A1 | 14-04-2005 |
| | | | WO | 03056526 | A2 | 10-07-2003 |
| EP 1048961 | A2 | 02-11-2000 | DE | 19919925 | A1 | 16-11-2000 |
| | | | EP | 1048961 | A2 | 02-11-2000 |
| | | | ES | 2328898 | T3 | 19-11-2009 |
| | | | US | 6614536 | B1 | 02-09-2003 |
| EP 1040366 | A1 | 04-10-2000 | EP | 1040366 | A1 | 04-10-2000 |
| | | | JP | 3860412 | B2 | 20-12-2006 |
| | | | JP | 2002500367 | A | 08-01-2002 |
| | | | US | 6373557 | B1 | 16-04-2002 |
| | | | WO | 9934235 | A1 | 08-07-1999 |
| US 2010301193 | A1 | 02-12-2010 | EP | 2238471 | A1 | 13-10-2010 |
| | | | FR | 2927196 | A1 | 07-08-2009 |
| | | | JP | 2011514709 | A | 06-05-2011 |
| | | | US | 2010301193 | A1 | 02-12-2010 |
| | | | WO | 2009095629 | A1 | 06-08-2009 |
| EP 1843171 | A1 | 10-10-2007 | AT | 433125 | T | 15-06-2009 |
| | | | DE | 102006016026 | A1 | 11-10-2007 |
| | | | EP | 1843171 | A1 | 10-10-2007 |
| | | | ES | 2325134 | T3 | 26-08-2009 |
| DE 102005046950 | B3 | 21-12-2006 | DE | 102005046950 | B3 | 21-12-2006 |
| | | | EP | 1932017 | A1 | 18-06-2008 |
| | | | US | 2009135405 | A1 | 28-05-2009 |
| | | | WO | 2007036557 | A1 | 05-04-2007 |

EPO FORM P0461

Für nähere Einzelheiten zu diesem Anhang : siehe Amtsblatt des Europäischen Patentamts, Nr.12/82